# EUROPEAN PATENT SPECIFICATION

(11) **EP 2 683 201 B1**
(45) Date of publication and mention of the grant of the patent: **13.12.2017**
(21) Application number: 11860443.8
(22) Date of filing: 30.12.2011
(51) Int. Cl.: H04W 48/02, H04W 4/00

(54) **METHOD FOR ACCESSING A CELL, METHOD FOR SELECTING A CELL, BASE STATION DEVICE AND USER EQUIPMENT DEVICE**
VERFAHREN ZUM ZELLENZUGANG, VERFAHREN ZUR ZELLENAUSWAHL, BASISSTATION UND BENUTZERAUSRÜSTUNG
PROCÉDÉ POUR L'ACCÈS À UNE CELLULE, PROCÉDÉ POUR SÉLECTIONNER UNE CELLULE, STATION DE BASE ET ÉQUIPEMENT D'UTILISATEUR

(30) Priority: 04.03.2011 CN 201110051871
(43) Date of publication of application: 08.01.2014
(73) Proprietor: China Academy of Telecommunications Technology, Hai Dian District Beijing 100191 (CN)
(72) Inventor: QUAN, Haiyang, Haidian District Beijing 100191 (CN); FANG, Jiayi, Haidian District Beijing 100191 (CN); ZHAO, Yi, Haidian District Beijing 100191 (CN)
(74) Representative: Körfer, Thomas
(86) International application number: PCT/CN2011/085014
(87) International publication number: WO 2012/119477

(56) References cited:
- CN-A- 101 969 635
- CN-A- 102 045 810
- CN-A- 102 118 833
- CN-A- 102 223 672
- CN-A- 102 223 729
- GB-A- 2 443 233
- US-A1- 2010 146 117
- VODAFONE: "Access Class Barring for Devices Configured for MTC", 3GPP DRAFT; R2-105502_36331_CRXXXX_ACB FOR MTC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Xi'an; 20101011, 4 October 2010 (2010-10-04), XP050452488, [retrieved on 2010-10-04]

## Description

### Field of the Invention

The present invention relates to communication technologies, and more particularly, to an indication method for accessing a cell, a method for selecting a cell and a device.

### Background of the Invention

An objective of Machine-type communication (MTC), as a new communication concept, is to combine a variety of communication technologies with different types (e.g., machine-to-machine communication, machine control communication, human-computer interaction communication, mobile interconnection communication, etc.), so as to promote the development of social production and lifestyles. The MTC communication is also called machine-to-machine (M2M) communication.

A current mobile communication network is designed for communication between human beings (e.g., the determination of network capacity, etc.). If it is wanted to use the current mobile communication network to support the M2M communication, mechanisms of a current mobile communication system are to be optimized according to characteristics of the M2M communication, so that the M2M communication can be better achieved under the circumstance that the conventional communication between human beings is not affected or is less affected.

The possible characteristics of the MTC communication we know include:
(1) a MTC device has low mobility.
(2) the time of data transmission between the MTC device and a network side is controllable, i.e., the MTC device may access within a period of time specified by the network.
(3) there is a low real-time requirement for the data transmission between the MTC device and the network side, i.e., there is a time tolerance.
(4) energy of the MTC device is limited, and very low power consumption is required.
(5) there is a small amount of information transmission between the MTC device and the network side.
(6) the MTC devices can be managed taking a group as a unit.

In practice, a MTC device may have one or more than one of the above-mentioned characteristics.

With the gradual expansion of the MTC communication service, it has become a development trend in the future that the cost of the MTC device is reduced through reducing the capability of the MTC device under the circumstance that massive MTC devices are employed. That a lower User Equipment (UE) category is defined for the MTC device results in problems how the network can identify such MTC device and ensure that such MTC device can get services in the network.

UE categories defined in a conventional Long Term Evolution (LTE) system are shown as follows.

**Table 1 Downlink physical layer parameters configured by the UE categories**

| UE category | Maximum number of Downlink Shared Channel (DL-SCH) transport block (TB) bits received within a TTI | Maximum number of bits of a DL-SCH TB received within a TTI | Total number of soft channel bits | Maximum number of supported layers for spatial multiplexing in DL |
|---|---|---|---|---|
| category1 | 10296 | 10296 | 250368 | 1 |
| category2 | 51024 | 51024 | 1237248 | 2 |
| category3 | 102048 | 75376 | 1237248 | 2 |
| category4 | 150752 | 75376 | 1827072 | 2 |
| category5 | 299552 | 149776 | 3667200 | 4 |

**Table 2 Uplink physical layer parameters configured by the UE categories**

| UE category | Maximum number of bits of an Uplink SCH (UL-SCH) TB transmitted within a TTI | Support for 64QAM in UL |
|---|---|---|
| category1 | 5160 | no |
| category2 | 25456 | no |
| category3 | 51024 | no |
| category4 | 51024 | no |
| category5 | 75376 | yes |

**Table 3 Total layer 2 buffer sizes configured by the UE categories**

| UE category | Total layer 2 buffer size [bytes] |
|---|---|
| category 1 | 150 000 |
| category2 | 700 000 |
| category3 | 1 400 000 |
| category4 | 1 900 000 |
| category5 | 3 500 000 |

It should be noted that the UE category in Table 1, Table 2, and Table 3 is called a UE Type in the LTE standard, and in order to distinguish from a UE Type defined in examples of the present invention, the UE category is used for description herein.

Currently, UE capability indicated by category 1 is the lowest UE capability. The lowest UE category supported by a UE is category1. When the category of the UE is higher, the network also considers that the lowest UE category supported by the UE is category 1. That is, the minimum buffer size in the UE is a case indicated by category 1, other categories are greater than or equal to requirements of the buffer corresponding to this category.

During the process of implementing the examples of the present invention, applicants find that conventional systems at least have problems as follows.

A UE category is separately defined for the MTC device to reduce the cost of the MTC device, requirements of the UE category to the buffer is lower than requirements in the existing category 1. In addition, a specific UE category of the MTC device cannot be supported in the earliest network because versions of standards introduced are different. Therefore, the network may not be able to correctly determine the UE category of a MTC device when the MTC device accesses the network, so that problems occur in resource allocation and buffer considerations. Moreover, according to a definition in conventional protocols, a UE must report any one of categories 1-5, i.e., the UE at least supports category1, which results in that the capability of the UE cannot be lower than the existing lowest capability.

For example, five UE categories are supported in a LTE Release-8 (R8) system, and the lowest UE category is category1, as shown in Table 4.

**Table 4**

| UE category | Maximum number of Downlink Shared Channel (DL-SCH) transport block (TB) bits received within a TTI | Maximum number of bits of a DL-SCH TB received within a TTI | Total number of soft channel bits | Maximum number of supported layers for spatial multiplexing in DL |
|---|---|---|---|---|
| category 1 | 10296 | 10296 | 250368 | 1 |

If it is defined that a UE with a new low UE category supports only one Hybrid Automatic Repeat Request (HARQ) process, the capability is shown in Table 5.

**Table 5**

| UE category | Maximum number of Downlink Shared Channel (DL-SCH) transport block (TB) bits received within a TTI | Maximum number of bits of a DL-SCH TB received within a TTI | Total number of soft channel bits | Maximum number of supported layers for spatial multiplexing in DL |
|---|---|---|---|---|
| Category x | 10296 | 10296 | 31296 | 1 |

When a UE of category x is to access a network not supporting the UE of category x, the network side does not detect that the category of the UE is x, but processes according to a lowest UE-category UE which may be identified by the network side, and thus the network side determines that the UE supports eight HARQ processes, and allocates, within one RTT time window, a plurality of HARQ resources for the UE to perform data transmission. In fact, the UE only supports a single HARQ process, and the buffer size of the UE can only store data of one HARQ. In this case, data is lost or resources are wasted.

GB 2 443 233 A discloses an access class barring method for controlling load within a mobile radio communications network and including the step of signalling restriction parameters from the network to user equipment, wherein the restriction parameters comprise access class data and application and procedure class data.

### Summary of the Invention

The present invention discloses an indication method for accessing a cell, a method for selecting a cell, a base station device and a user equipment device, so as to control access of a MTC device, and thus system overhead is reduced.

To achieve the above objective, an example of the present invention provides an indication method for accessing a cell, including:
broadcasting, by a base station, network access control information;
wherein the network access control information is to indicate whether a cell of the base station permits access of a user equipment (UE) with a specific UE category, and the specific UE category is defined by downlink physical layer parameters, uplink physical layer parameters and layer 2 buffer size.

An example of the present invention provides a base station device, including:
a sending module, to send network access control information;
wherein the network access control information is to indicate whether a cell of the base station permits access of a UE with a specific UE category, and the specific UE category is defined by downlink physical layer parameters, uplink physical layer parameters and layer 2 buffer size.

An example of the present invention provides a method for selecting a cell, including:
receiving, by a user equipment (UE), network access control information broadcasted by a base station, wherein the network access control information is to indicate whether a cell of the base station permits access of a UE with a specific UE category, and the specific UE category is defined by downlink physical layer parameters, uplink physical layer parameters and layer 2 buffer size;
determining, by the UE, whether it is permitted to access the cell of the base station according to the network access control information received; and
performing, by the UE, cell selection according to a determination result.

An example of the present invention provides a user equipment (UE) device, including:
a receiving module, to receive network access control information broadcasted by a base station, wherein the network access control information is to indicate whether a cell of the base station permits access of a UE with a specific UE category, and the specific UE category is defined by downlink physical layer parameters, uplink physical layer parameters and layer 2 buffer size;
a determining module, to determine whether it is permitted to access the cell of the base station according to the network access control information received; and
a selecting module, to perform cell selection according to a determination result.

Compared with the conventional systems, the examples of the present invention at least have advantages as follows. The network access control information is broadcasted through the base station, a UE can determine, when selecting a cell to camp, whether the UE itself meets requirements for accessing the cell, and perform the cell selection according to a determination result. By this way, the access of the MTC device can be controlled, and therefore system overhead is reduced.

### Brief Description of Drawings

Figure 1 is a schematic diagram illustrating a state mechanism for selecting or reselecting a cell by a UE in conventional systems;
Figure 2 is a flowchart illustrating an indication method for accessing a cell in accordance with a first example of the present invention;
Figure 3 is a flowchart illustrating an indication method for accessing a cell in accordance with a second example of the present invention;
Figure 4 is a flowchart illustrating an indication method for accessing a cell in accordance with a third example of the present invention;
Figure 5 is a flowchart illustrating an indication method for accessing a cell in accordance with a fourth example of the present invention;
Figure 6 is a schematic diagram illustrating a structure of a base station device in accordance with a fifth example of the present invention;
Figure 7 is a schematic diagram illustrating a structure of a UE device in accordance with a sixth example of the present invention.

### Detailed Description of the Invention

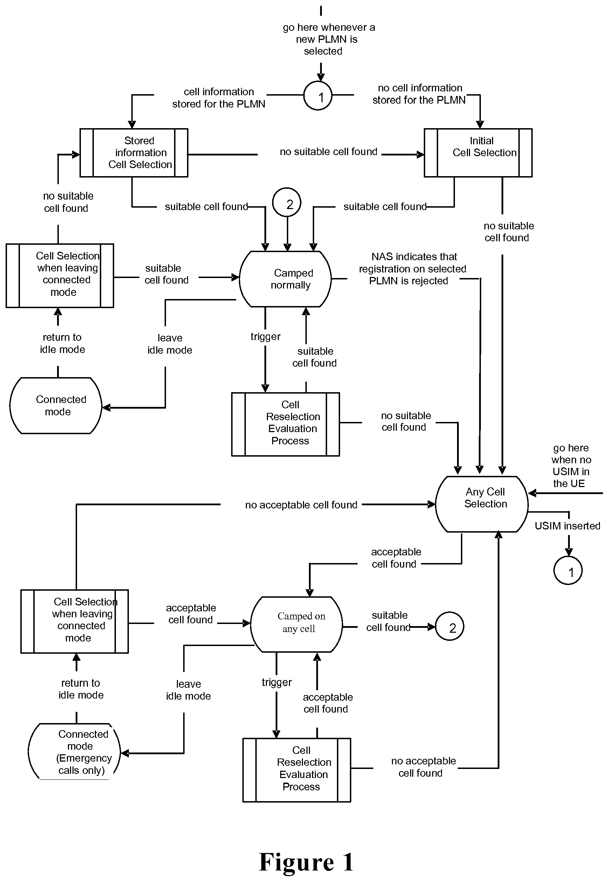

In conventional systems, a UE has a function for selecting and reselecting a cell. Figure 1 is a schematic diagram illustrating a state mechanism for selecting or reselecting a cell by a UE in the conventional systems. In this case, a process for selecting the cell by the UE may include operations as follows.

After the UE is powered on, an Access Stratum (AS) layer reports to a Non-Access Stratum (NAS) layer Public Land Mobile Networks (PLMN) searched out. The NAS layer selects a PLMN, the UE searches for cells under the PLMN after the PLMN is selected, and selects, from the cells searched out, a cell with a good quality. Specific operations may show as follows.

The first operation is that if the UE stores information about some cells, the UE preferably selects among these cells. If requirements of cell selection are met, a cell having the best quality among the cells meeting the selection requirements is selected to camp. That is, a "camped normally" mode is entered.

The second operation is that initial cell selection is performed if the appropriate cell is not selected from the stored cells. In this case, cells are searched for on each frequency band, and a cell having the best quality is selected to camp, therefore, the "camped normally" mode is entered also.

The third operation is that the UE may enter into a connected mode through a random access procedure when the UE has a service requirement. The UE changes from the connected mode to an idle mode when the service is completed and a cell selection process when leaving the connected mode is performed, that is, cell reselection is performed on carriers given by redirection information in a Radio Resource Control (RRC) connection release message, and an appropriate cell is selected to camp. The first operation is performed if no appropriate cell is selected.

The fourth operation is that an "any cell selection" mode is entered if the appropriate cell that may be camped is not searched out during the process of operation 2.

The fifth operation is that the UE may search for any cell to camp under the "any cell selection" mode, and enter into a "camp on any cell" mode. Under this mode, it is only allowable for the UE to make an emergency call.

In the technical solution provided by examples of the present invention, a base station broadcasts network access control information to indicate whether a cell of the base station permits access of a specific UE-category UE, access of a specific access class UE, or access of a UE supporting a specific service. A UE determines, after receiving the network access control information broadcasted by the base station, whether it is permitted to access the cell of the base station based on the network access control information, and performs cell selection according to a determination result.

Compared with the conventional systems, in the examples of the present invention, the network access control information is broadcasted through the base station, a MTC device may determine, when selecting a cell to camp, whether the MTC device meets requirements for accessing the cell, and perform the cell selection according to a determination result. By this way, the access of the MTC device can be controlled, and therefore system overhead is reduced.

Hereinafter, the examples of the present invention are described in further detail with reference to the accompanying drawings. Obviously, the described examples are part of examples of the present invention, but not all of the examples. Based on the examples of the present invention, all of other examples obtained by a person skilled in the art without performing creative efforts should belong to the protection scope of the present invention.

### A first example

The first example of the present invention provides an indication method for accessing a cell. In this example, a base station indicates a UE to select a cell to access through broadcasting whether the access of a specific UE-category UE is permitted.

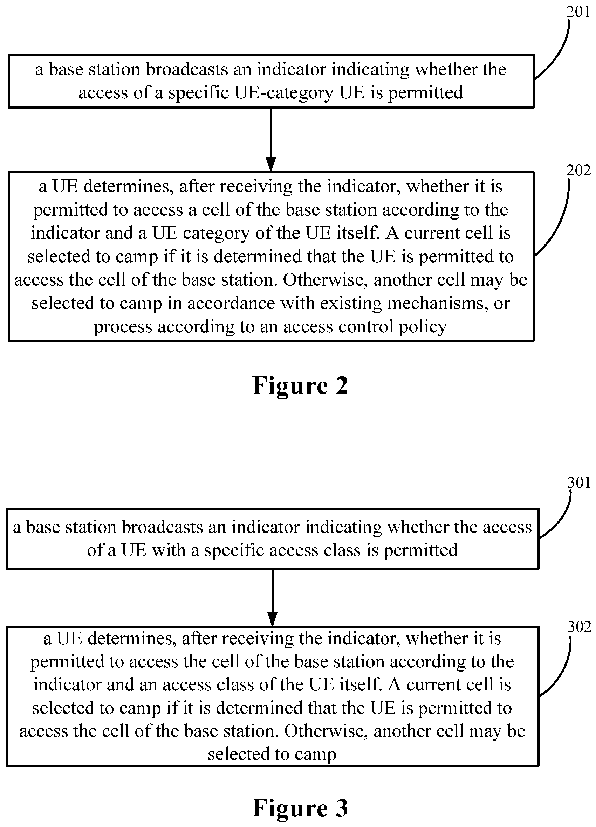

Figure 2 is a flowchart illustrating an indication method for accessing a cell in accordance with the example of the present invention. As shown in Figure 2, the method may include operations as follows.

In block 201, a base station broadcasts an indicator indicating whether the access of a specific UE-category UE is permitted.

In this case, a R10 network may be accessed by a low UE-category MTC device so as to provide a communication service for the MTC device. Of course, if deployment of the R10 network is mainly targeted to H2H users, the R10 network may not permit the access of the low UE-category MTC device either. Usually, a R9 network does not permit the access of the low UE-category MTC device. Of course, the R9 network may permit the access of an identical category MTC device when the R9 network is upgraded.

In block 202, a UE determines, after receiving the indicator, whether it is permitted to access a cell of the base station according to the indicator and a UE category of the UE itself. A current cell is selected to camp if it is determined that the UE is permitted to access the cell of the base station. Otherwise, another cell may be selected to camp in accordance with existing mechanisms, or process according to an access control policy, wherein the access control policy may be developed according to requirements, the example of the present invention does not limit herein.

Specifically, the example of the present invention takes a MTC low UE category defined in the LTE R10 version as category9 as an example, wherein the capability of the MTC low UE category is lower than UE categories of the UE defined in conventional protocols. Indication information broadcasted by the base station may be an indicator indicating whether the access of a category9 UE is supported. For example, in the R10 network, the base station may configure a mtc-barring-r10 field in System Information Block 1 (SIB1) of a broadcast message (referred to as system information in the prior art), wherein a value of the field may be TRUE or FALSE. It is indicated that the access of the category9 UE is permitted when the value is TRUE. And, it is indicated that the access of the category9 UE is not permitted when the value is FALSE.

Upon receiving the broadcast message, the UE selects the cell of the base station to camp if the value of the mtc-barring-r10 field read by the UE from the broadcast message is TRUE and a UE category of the UE is category9 (i.e., the UE is a low UE-category MTC device); and, the UE does not select the cell of the base station to camp if the value of the mtc-barring-r10 field read by the UE from the broadcast message is FALSE and the UE category of the UE is category9, in this case, the UE may proceed with the cell selection or reselection to select another cell which permits the access of UE to camp. If the mtc-barring-r10 field is not carried in the broadcast message received by the UE during the process of cell selection (e.g., the mtc-barring-r10 field is not configured in the broadcast message in a low version network), it is determined that the cell does not permit the access of the UE.

Considering access permissions of UEs with other UE categories, when the indicator broadcasted by the base station indicates that the access of the low UE-category MTC device (e.g., the UE category is category9) is permitted in the example of the present invention, it may also means that the access of a MTC device of which a UE category is not lower than the low UE category (e.g., category9) is permitted. Of course, it may be defined that only the access of the low UE-category MTC device is permitted. When the indicator broadcasted by the base station indicates that the access of the low UE-category MTC device is not permitted (e.g., the UE category is category9), the access of the UEs with other UE categories may be defined according to existing protocols.

### A second example

The second example of the present invention provides an indication method for accessing a cell. In this example, a base station indicates a UE to select a cell to access through broadcasting whether the access of a UE with a specific access class (AC) is permitted.

Figure 3 is a flowchart illustrating an indication method for accessing a cell in accordance with the example of the present invention. As shown in Figure 3, the method may include operations as follows.

In block 301, a base station broadcasts an indicator indicating whether the access of a UE with a specific access class is permitted.

Specifically, the example of the present invention is described taking adding a definition of a MTC low UE category in the version R10 of the Universal Mobile Telecommunications System (UMTS) and adding AC control information of a low UE-category UE in the broadcast of the base station as an example. There are 16 access classes configured for a UE in the existing R10 network of the UMTS system, i.e., ACs 0-15. In order to make a low UE-category MTC device to access the network, and to ensure that the network can correctly identify the low UE-category MTC device, an operator may configure a new AC for the low UE-category MTC device to distinguish from the existing ACs 0-15, and control information about the AC of the low UE-category MTC device is added in the broadcast message of the base station to indicate whether it is permitted for the low UE-category MTC device with the corresponding AC to access a cell of the base station. For example, the AC of the low UE-category MTC device may be defined as any one of ACs 16-20. It may be defined as AC16 in the example of the present invention. The newly-defined AC is lower than ACs defined in existing protocols.

In block 302, a UE determines, after receiving the indicator, whether it is permitted to access the cell of the base station according to the indicator and an access class of the UE itself. A current cell is selected to camp if it is determined that the UE is permitted to access the cell of the base station. Otherwise, another cell may be selected to camp.

Specifically, if an AC of a low UE-category MTC device is configured as AC 16 and a value of the indicator broadcasted in the broadcast message of the base station is TRUE (which means that the cell of the base station permits the access of an AC16 UE-category UE), the AC16 MTC device selects the current cell to camp. If the value of the indicator broadcasted by the base station is FALSE (which means that the cell of the base station does not permit the access of the AC16 UE-category UE), the AC16 MTC device selects another cell to camp. If the indicator is not included in the broadcast message received by the MTC device during the process of cell selection, it is determined that the cell does not permit the access of the AC16 MTC device.

Considering access permissions of UEs with other access classes, when the indicator broadcasted by the base station indicates that the access of the MTC device with the newly-added access class (e.g., the MTC device of which the access class is AC16) is permitted in the example of the present invention, it may also means that the access of a MTC device with an access class which is not lower than the newly-added access class (e.g., AC16) is permitted. Of course, it may be defined that only the access of the MTC device with the indicated access class is permitted. When the indicator broadcasted by the base station indicates that the access of the MTC device with the newly-added access class is not permitted (e.g., the access class is AC16), the access of the UEs with other access classes may be defined according to existing protocols.

### A third example

The third example of the present invention provides an indication method for accessing a cell. In this example, a base station indicates a UE to select a cell to access through broadcasting indication information indicating that it is permitted for a UE supporting a specific service to access a corresponding cell.

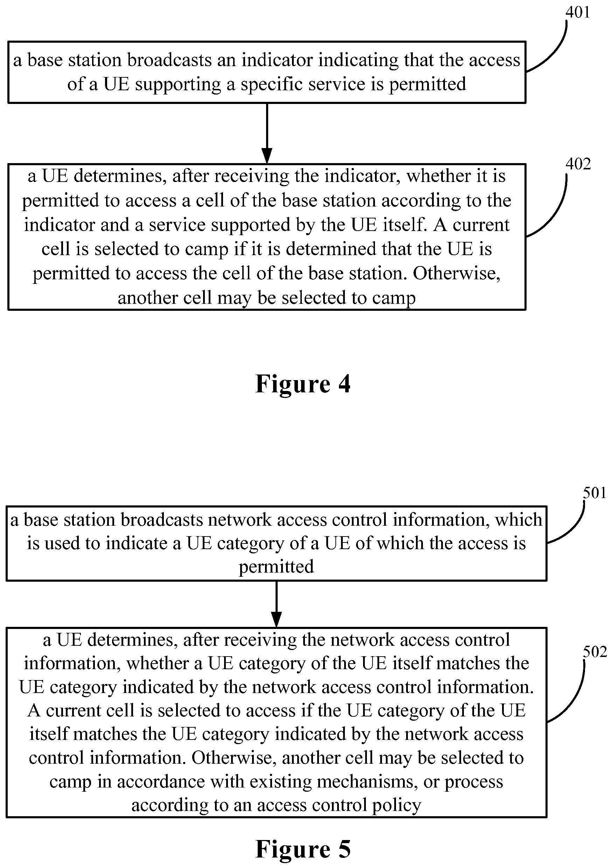

Figure 4 is a flowchart illustrating an indication method for accessing a cell in accordance with the example of the present invention. As shown in Figure 4, the method may include operations as follows.

In block 401, a base station broadcasts an indicator indicating that the access of a UE supporting a specific service is permitted.

In this case, the specific service may be a service of a specific access class, e.g., a service of an access class that may be supported by a MTC device, or may be a service with a specific type, e.g., a service that may be implemented by the MTC device, such as an automatically-reported service of a water meter or an electricity meter, or a taxi management and scheduling service.

In block 402, a UE determines, after receiving the indicator, whether it is permitted to access a cell of the base station according to the indicator and a service supported by the UE itself. A current cell is selected to camp if it is determined that the UE is permitted to access the cell of the base station. Otherwise, another cell may be selected to camp.

Specifically, the example of the present invention is described taking adding a definition of a MTC low UE category in a Long Term Evolution Advanced (LTE-A) system and adding control of an AC of a service supported by a low UE-category MTC device in the broadcast of the base station as an example. For example, a low UE-category MTC device only supports a low-priority service, such as the automatically-reported service supported by an automatically-reported apparatus of a water meter or an electricity meter. The operator may define a new access class (e.g., AC17) for the low-priority service supported by the low UE-category MTC device to distinguish from the existing access classes. The base station may add, when broadcasting an access control message, access control of the service with the newly-added access class in the broadcast message, e.g., an indicator is added in a system information block (SIB) message to indicate that it is permitted for the service with the newly-added access class (AC 17) to access the cell of the base station. When the broadcast message of the base station is received by the UE, it is determined that the UE is permitted to access the cell of the base station if the indicator is included in the broadcast message and the UE supports the AC17 service, and the UE may select the cell of the base station to camp. It is determined that the UE is not permitted to access the cell of the base station if the indicator is not included in the broadcast message received by the UE or a value of the indicator indicates that the access of the AC17 service is not permitted, the UE selects another cell to camp.

Considering access permissions of services of other access classes, when the indicator broadcasted by the base station indicates that the access of the service of the newly-added access class (e.g., the service of which the access class is AC17) is permitted in the example of the present invention, it may also means that the access of a service of which an access class is not lower than the newly-added access class (e.g., AC17) is permitted. Of course, it may be defined that only the access of the service of the indicated access class is permitted. When the indicator broadcasted by the base station indicates that the access of the service of the newly-added access class (e.g., the access class is AC 17) is not permitted, the access of the services of other access classes may be defined according to existing protocols.

It should be noted that the specific service in the above example may be a service of a specific access class, e.g., an AC 17 service, or may be a certain specific service, e.g., the taxi management and scheduling service. The base station may also control the access of the certain specific service. The base station may add access control information (e.g., an indicator indicating whether the access of the service is permitted) about the service into the broadcast message to control the access of the service, the specific implementation is not repeated herein.

In the above first example, the second example and the third example, the network access control information is broadcasted through broadcasting an indicator by the base station, the UE may determine whether the UE meets requirements for accessing a cell when the UE selects the cell to access. The UE may perform the cell selection according to a determination result. By this way, the access of a MTC device can be controlled, and thus system overhead is reduced.

### A fourth example

The fourth example of the present invention provides an indication method for accessing a cell. In this example, a base station indicates a UE to select a cell to access through broadcasting whether the access of a UE with a specific feature is permitted, wherein the specific feature may be a UE category of the UE, an access class of the UE, or an access class of a service supported by the UE. For ease of description, the example takes the UE category as an example.

Figure 5 is a flowchart illustrating an indication method for accessing a cell in accordance with the example of the present invention. As shown in Figure 5, the method may include operations as follows.

In block 501, a base station broadcasts network access control information, which is used to indicate a UE category of a UE of which the access is permitted.

In clock 502, a UE determines, after receiving the network access control information, whether a UE category of the UE itself matches the UE category indicated by the network access control information. A current cell is selected to access if the UE category of the UE itself matches the UE category indicated by the network access control information. Otherwise, another cell may be selected to camp in accordance with existing mechanisms, or process according to an access control policy, wherein the access control policy may be defined according to requirements, the example of the present invention does not limit herein.

Specifically, the example of the present invention is described taking adding the definition of the MTC low UE category in the LTE R10 version and adding a special field in the broadcast of the base station to control the access of a low UE-category UE as an example. The control information broadcasted by the base station may be a UE category of a UE of which the access is permitted. For example, the base station configures a special field in the broadcast message and configures a value of the field as the UE category "category9", which is used to indicate that the access of a UE of which the UE category is category9 is permitted. After receiving the broadcast message, the UE reads that the UE category indicated by the value of the special field is category9, and determines whether the UE category of the UE itself matches the indicated UE category. The UE selects the cell of the base station to camp if the UE category of the UE itself matches the indicated UE category, otherwise, the UE determines that it is not permitted for the UE to access the cell of the base station, and the UE may select another cell which permits the access of the UE to camp. It is determined that the UE is not permitted to access the cell if the special field is not carried in the broadcast message received by the UE during the process for selecting the cell by the UE.

Considering access permissions of UEs with other UE categories, in the example of the present invention, when a UE category of a UE of which the access is permitted indicated by the network access control information broadcasted by the base station is category9, it may also means that the access of a MTC device of which a UE category is not lower than category9 is permitted. Of course, it may be defined that only the access of the MTC device of which the UE category is category9 is permitted. When the network access control information broadcasted by the base station indicates that the access of the MTC device of which the UE category is category9 is not permitted, the access of the UEs with other UE categories may be defined according to existing protocols.

It should be noted that in the technical solution provided by the example of the present invention, the network access control information broadcasted by the base station may be used not only to indicate the UE category of the UE of which the access is permitted, but also to indicate an access class of the UE of which the access is permitted or an access class of a service supported by the UE of which the access is permitted. The UE determines, after receiving the broadcast message, whether an access class of the UE itself (or an access class of a service supported by the UE) matches the access class (or the access class of the service supported by the UE) indicated by the broadcast message, and it is determined that the UE is permitted to access the cell of the base station if the access class of the UE itself (or the access class of the service supported by the UE) matches the access class (or the access class of the service supported by the UE) indicated by the broadcast message, otherwise, it is determined that the UE is not permitted to access the cell of the base station.

It should be noted that the methods provided by the examples of the present invention can be applied to the LTE system, the LTE-A system, as well as the UMTS system.

### A fifth example

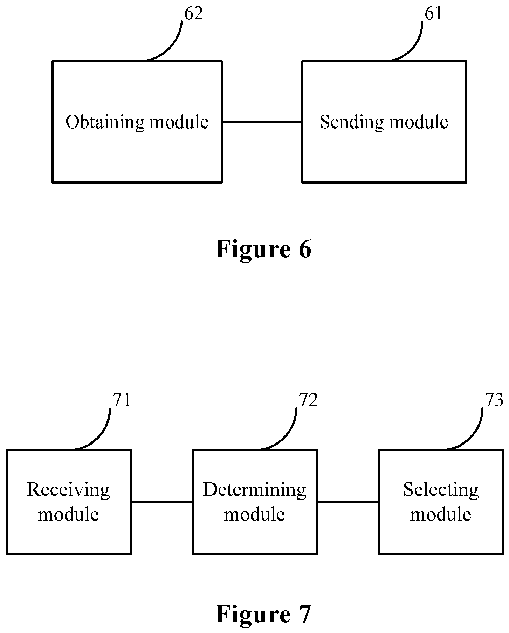

Based on the same inventive concept as the above-mentioned indication method for accessing a cell, the fifth example of the present invention further provides a base station device, as shown in Figure 6, the base station may include:
a sending module 61, to send network access control information, wherein the network access control information is used to indicate whether a cell of the base station permits the access of a UE with a specific UE category, or the access of a UE with a specific access class, or to indicate whether the cell of the base station permits the access of a UE supporting a specific service.

Specifically, the sending module 61 is configured to send an indicator indicating whether the access of the UE with the specific UE category is permitted; or
to send an indicator indicating whether the access of the UE with the specific access class is permitted; or
to send an indicator indicating whether the access of the UE supporting the specific service is permitted, wherein the specific service may be a service of the specific UE category, or may be a service of the specific access class; or
to send feature information of a UE of which the access is permitted, wherein the feature information may be a UE category of the UE, or an access class of the UE, or a UE category of a service supported by the UE, or an access class of the service supported by the UE.

The base station provided by the example of the present invention may further include an obtaining module 62, to obtain the network access control information which is sent through the sending module 61.

### A sixth example

Based on the same inventive concept as the above-mentioned indication method for accessing a cell, the sixth example of the present invention further provides a UE device, as shown in Figure 7, the UE may include:
a receiving module 71, to receive network access control information broadcasted by a base station, wherein the network access control information is used to indicate whether a cell of the base station permits the access of a UE with a specific UE category, or the access of a UE with a specific access class, or to indicate whether the cell of the base station permits the access of a UE supporting a specific service;
a determining module 72, to determined whether it is permitted to access the cell of the base station according to the network access control information received by the receiving module 71; and
a selecting module 73, to perform cell selection according to a determination result of the determining module 72.

Specifically, when the network access control information received by the receiving module 71 is an indicator indicating whether the access of the UE with the specific UE category is permitted, the determining module 72 is configured to determine whether it is permitted to access the cell of the base station according to a UE category of the UE and the indicator.

When the network access control information received by the receiving module 71 is an indicator indicating whether the access of the UE with the specific access class is permitted, the determining module 72 is configured to determine whether it is permitted to access the cell of the base station according to an access class of the UE and the indicator.

When the network access control information received by the receiving module 71 is an indicator indicating whether the access of the UE supporting the specific service (e.g., a service of the specific access class) is permitted, the determining module 72 is configured to determine whether it is permitted to access the cell of the base station according to a service supported by the UE and the indicator.

Specifically, when the network access control information is the indicator indicating whether the access of the UE supporting the service of the specific access class is permitted, the determining module 72 is configured to determine whether it is permitted to access the cell of the base station according to an access class of the service supported by the UE and the indicator.

When the network access control information received by the receiving module 71 is feature information of a UE of which the access is permitted (e.g., a UE category of the UE, an access class of the UE, or an access class of a service supported by the UE), the determining module 72 is configured to determine whether it is permitted to access the cell of the base station according to feature information of the UE and the feature information indicated by the network access control information.

Specifically, when the network access control information is the UE category of the UE of which the access is permitted, the determining module 72 is configured to determine whether it is permitted to access the cell of the base station according to the UE category of the UE and the network access control information;
when the network access control information is the access class of the UE of which the access is permitted, the determining module 72 is configured to determine whether it is permitted to access the cell of the base station according to the access class of the UE and the network access control information; and
when the network access control information is the access class of the service supported by the UE of which the access is permitted, the determining module 72 is configured to determine whether it is permitted to access the cell of the base station according to the access class of the service supported by the UE and the network access control information.

The selecting module 73 is configured to select the cell of the base station to camp when the determining module 72 determines that the UE is permitted to access the cell of the base station; and to select another cell to camp when the determining module 72 determines that the UE is not permitted to access to the cell of the base station.

It should be noted that the determining module 72 determines that the cell of the base station does not permit the access of the UE when the receiving module 71 does not receive the network access control information broadcasted by the base station, and the selecting module 73 selects the other cell to camp.

The above-mentioned modules in the examples of the present invention may be deployed either in a centralized or a distributed configuration, and may be either merged into a single module, or further split into a plurality of sub-modules.

According to the description of the above examples, it can be clearly understood by those skilled in the art that the examples of the present invention can be implemented by software accompanying with necessary general hardware platforms, or by hardware. Based on this, the essential parts of the technical solution mentioned above or the part contributed to the prior art can be presented in the form of a software product. The software product may be stored in a storage medium, and includes a plurality of instructions for making a computer device (which can be a personal computer, a server or a network device) implement methods recited in the examples of the present invention.

Those skilled in the art may understand that the accompanying figures are only illustrations of examples, wherein the modules or procedures shown in the figures are not necessarily essential for implementing the present invention.

Those skilled in the art may understand that the modules in the devices provided by the examples of the present invention may be deployed in the devices of the present invention according to descriptions of the examples, or may be deployed in one or a plurality of devices different from the examples of the present invention. The modules in the aforesaid examples may be merged into a single module, or further split into a plurality of sub-modules.

The serial number of the examples of the present invention is just used for description, and does not used for judging the examples.

The above are examples of the present invention, and are not used for limiting the protection scope of the present invention. Any modifications, equivalents, improvements, etc., made under the principle of the present invention should be included in the protection scope of the present invention.

## Claims

1. An indication method for accessing a cell, comprising:
broadcasting (501), by a base station, network access control information;
**characterized in that** the network access control information is to indicate whether a cell of the base station permits access of a user equipment, UE, with a specific UE category, and the specific UE category is defined by downlink physical layer parameters, uplink physical layer parameters and layer 2 buffer size.

2. The method of claim 1, wherein the network access control information comprises:
an indicator indicating whether the access of the UE with the specific UE category is permitted.

3. The method of claim 1, wherein the network access control information comprises feature information of a UE of which access is permitted;
wherein the feature information comprises a UE category of the UE of which the access is permitted.

4. The method of any of claims 1-3, wherein the specific UE category is a UE category of a Machine-type communication, MTC, device.

5. A base station device, comprising:
a sending module (61), configured to send network access control information;
**characterized in that** the network access control information is to indicate whether a cell of the base station permits access of a user equipment, UE, with a specific UE category, and the specific UE category is defined by downlink physical layer parameters, uplink physical layer parameters and layer 2 buffer size.

6. The device of claim 5, wherein the sending module (61) is further configured to send an indicator indicating whether the access of the UE with the specific UE category is permitted.

7. The device of claim 5, wherein the sending module (61) is further configured to send feature information of a UE of which access is permitted;
wherein the feature information comprises a UE category of the UE of which the access is permitted, and
the sending module (61) is further configured to send the UE category of the UE of which the access is permitted.

8. A method for selecting a cell, comprising:
receiving, by a user equipment, UE, network access control information broadcasted by a base station, **characterized in that** the network access control information is to indicate whether a cell of the base station permits access of a UE with a specific UE category, and the specific UE category is defined by downlink physical layer parameters, uplink physical layer parameters and layer 2 buffer size;
determining, by the UE, whether it is permitted to access the cell of the base station according to the network access control information received; and
performing, by the UE, cell selection according to the determination result.

9. The method of claim 8, wherein the determining by the UE whether it is permitted to access the cell of the base station according to the network access control information received comprises:
when the network access control information is a first indicator indicating whether the access of the UE with the specific UE category is permitted, determining, by the UE, whether it is permitted to access the cell of the base station according to a UE category of the UE and the first indicator.

10. The method of claim 8, wherein the network access control information comprises feature information of a UE of which access is permitted,
the determining by the UE whether it is permitted to access the cell of the base station according to the network access control information received comprises:
determining, by the UE, whether it is permitted to access the cell of the base station according to feature information of the UE and the feature information indicated by the network access control information.

11. The method of claim 10, wherein the determining by the UE whether it is permitted to access the cell of the base station according to feature information of the UE and the feature information indicated by the network access control information comprises:
when the feature information indicated by the network access control information is a UE category of the UE of which the access is permitted, determining, by the UE, that it is permitted to access the cell of the base station when a UE category of the UE matches the UE category of the UE of which the access is permitted.

12. The method of claim 8, wherein the performing cell selection according to the determination result comprises:
selecting (502), by the UE, the cell of the base station to camp when the UE determines that it is permitted to access the cell of the base station; and/or
selecting (502), by the UE, another cell to camp when the UE determines that it is not permitted to access the cell of the base station.

13. The method of any of claims 8-12, further comprising:
determining, by the UE, that it is not permitted to access the cell of the base station when the UE does not receive the network access control information;
wherein the specific UE category is a UE category of a Machine-type communication, MTC, device.

14. A user equipment, UE, device, comprising:
a receiving module (71), configured to receive network access control information broadcasted by a base station, **characterized in that** the network access control information is to indicate whether a cell of the base station permits access of a UE with a specific UE category, and the specific UE category is defined by downlink physical layer parameters, uplink physical layer parameters and layer 2 buffer size;
a determining module (72), configured to determine whether it is permitted to access the cell of the base station according to the network access control information received; and
a selecting module (73), configured to perform cell selection according to the determination result.

15. The device of claim 14, wherein when the network access control information is a first indicator indicating whether the access of the UE with the specific UE category is permitted, the determining module (72) is further configured to determine whether it is permitted to access the cell of the base station according to a UE category of the UE and the first indicator.

16. The device of claim 14, wherein the network access control information comprises feature information of a UE of which access is permitted;
the determining module (72) is further configured to determine whether it is permitted to access the cell of the base station according to feature information of the UE and the feature information indicated by the network access control information.

17. The device of claim 16, wherein when the feature information indicated by the network access control information is a UE category of the UE of which the access is permitted, the determining module (72) is further configured to determine that it is permitted to access the cell of the base station when a UE category of the UE matches the UE category of the UE of which the access is permitted.

18. The device of claim 14, wherein the selecting module (73) is further configured to select the cell of the base station to camp when the determining module (72) determines that the UE is permitted to access the cell of the base station; to select another cell to camp when the determining module (72) determines that the UE is not permitted to access the cell of the base station; and
the determining module (72) is further configured to determine that the UE is not permitted to access the cell of the base station when the receiving module (71) does not receive the network access control information.

## Patentansprüche

1. Anzeigeverfahren für einen Zellenzugang, mit dem Schritt:
Übertragen (501) von Netzzugangs-Steuerinformationen durch eine Basisstation;
**dadurch gekennzeichnet, dass** die Netzzugangs-Steuerinformationen anzeigen sollen, ob eine Zelle der Basisstation Zugang zu einer Benutzereinrichtung, UE, mit einer bestimmten Gerätekategorie erlaubt, und die bestimmte Gerätekategorie durch Downlink physikalische Schichtparameter (downlink physical layer parameters), Uplink physikalische Schichtparameter (uplink physical layer parameters) und Schicht-2 Puffergröße (layer 2 buffer size) definiert ist.

2. Verfahren nach Anspruch 1, wobei die Netzzugangs-Steuerinformationen Folgendes umfassen:
eine Anzeige, die anzeigt, ob der Zugang zu der UE mit der bestimmten Gerätekategorie erlaubt ist.

3. Verfahren nach Anspruch 1, wobei die Netzzugangs-Steuerinformationen Merkmalsinformationen einer UE umfassen, zu welcher der Zugang erlaubt ist;
wobei die Merkmalsinformationen eine Gerätekategorie der UE umfassen, zu welcher der Zugang erlaubt ist.

4. Verfahren nach einem der Ansprüche 1 bis 3, wobei die bestimmte Gerätekategorie eine Gerätekategorie einer maschinellen Datenübertragungsvorrichtung, MTC (machine-type communication), ist.

5. Basisstationsvorrichtung mit:
einem Sendemodul (61), das zum Senden von Netzzugangs-Steuerinformationen ausgeführt ist;
**dadurch gekennzeichnet, dass** die Netzzugangs-Steuerinformationen anzeigen sollen, ob eine Zelle der Basisstation den Zugang zu einer Benutzereinrichtung UE mit einer bestimmten Gerätekategorie erlaubt, und die bestimmte Gerätekategorie durch Downlink physikalische Schichtparameter, Uplink physikalische Schichtparameter und Schicht-2 Puffergröße definiert ist.

6. Vorrichtung nach Anspruch 5, wobei das Sendemodul (61) weiterhin zum Senden einer Anzeige ausgeführt ist, die anzeigt, ob der Zugang zu der UE mit der bestimmten Gerätekategorie erlaubt ist.

7. Vorrichtung nach Anspruch 5, wobei das Sendemodul (61) weiterhin zum Senden von Merkmalsinformationen einer UE ausgeführt ist, zu welcher der Zugang erlaubt ist;
wobei die Merkmalsinformationen eine Gerätekategorie der UE umfassen, zu welcher der Zugang erlaubt ist, und
das Sendemodul (61) weiterhin zum Senden der Gerätekategorie der UE ausgeführt ist, zu welcher der Zugang erlaubt ist.

8. Verfahren zum Auswählen einer Zelle, mit den Schritten:
Empfangen durch eine Benutzereinrichtung UE von über eine Basisstation übertragenen Netzzugangs-Steuerinformationen, **dadurch gekennzeichnet, dass** die Netzzugangs-Steuerinformationen anzeigen sollen, ob eine Zelle der Basisstation den Zugang zu einer UE mit einer bestimmten Gerätekategorie erlaubt, und die bestimmte Gerätekategorie durch Downlink physikalische Schichtparameter, Uplink physikalische Schichtparameter und Schicht-2 Puffergröße definiert ist;
Bestimmen durch die UE, ob der Zugang zu der Zelle der Basisstation gemäß den empfangenen Netzzugangs-Steuerinformationen erlaubt ist; und
Durchführen einer Zellenauswahl gemäß dem Bestimmungsergebnis durch die UE.

9. Verfahren nach Anspruch 8, wobei das Bestimmen durch die UE, ob der Zugang zu der Zelle der Basisstation gemäß den empfangenen Netzzugangs-Steuerinformationen erlaubt ist, Folgendes umfasst:
wenn die Netzzugangs-Steuerinformationen eine erste Anzeige darstellen, die anzeigt, ob der Zugang zu der UE mit der bestimmten Gerätekategorie erlaubt ist, Bestimmen durch die UE, ob ein Zugang zu der Zelle der Basisstation gemäß einer Gerätekategorie der UE und der ersten Anzeige erlaubt ist.

10. Verfahren nach Anspruch 8, wobei die Netzzugangs-Steuerinformationen Merkmalsinformationen einer UE umfassen, zu welcher der Zugang erlaubt ist,
das Bestimmen durch die UE, ob ein Zugang zu der Zelle der Basisstation gemäß den empfangenen Netzzugangs-Steuerinformationen erlaubt ist, Folgendes umfasst:
Bestimmen durch die UE, ob ein Zugang zu der Zelle der Basisstation gemäß Merkmalsinformationen der UE und den durch die Netzzugangs-Steuerinformationen angezeigten Merkmalsinformationen erlaubt ist.

11. Verfahren nach Anspruch 10, wobei das Bestimmen durch die UE, ob ein Zugang zu der Zelle der Basisstation gemäß Merkmalsinformationen der UE und den durch die Netzzugangs-Steuerinformationen angezeigten Merkmalsinformationen erlaubt ist, Folgendes umfasst:
wenn die durch die Netzzugangs-Steuerinformationen angezeigten Merkmalsinformationen eine Gerätekategorie der UE darstellen, zu welcher der Zugang erlaubt ist, Bestimmen durch die UE, dass ein Zugang zu der Zelle der Basisstation erlaubt ist, wenn eine Gerätekategorie der UE mit der Gerätekategorie der UE übereinstimmt, zu welcher der Zugang erlaubt ist.

12. Verfahren nach Anspruch 8, wobei die ausführende Zellenauswahl gemäß dem Bestimmungsergebnis Folgendes umfasst:
Auswählen (502), durch die UE, der Zelle der Basisstation zum Lagern (camp), wenn die UE bestimmt, dass ihr der Zugang zu der Zelle der Basisstation erlaubt ist; und/oder
Auswählen (502), durch die UE, einer weiteren Zelle zum Lagern, wenn die UE bestimmt, dass ihr der Zugang zu der Zelle der Basisstation nicht erlaubt ist.

13. Verfahren nach einem der Ansprüche 8-12, weiterhin mit dem Schritt:
Bestimmen durch die UE, dass ihr der Zugang zu der Zelle der Basisstation nicht erlaubt ist, wenn die UE die Netzzugangs-Steuerinformationen nicht empfängt;
wobei die bestimmte Gerätekategorie eine Gerätekategorie einer maschinellen Datenübertragungsvorrichtung, MTC, ist.

14. Benutzerausrüstung, UE, mit:
einem Empfangsmodul (71), das zum Empfangen von durch eine Basisstation übertragenen Netzzugangs-Steuerinformationen ausgeführt ist, **dadurch gekennzeichnet, dass** die Netzzugangs-Steuerinformationen anzeigen sollen, ob eine Zelle der Basisstation den Zugang zu einer UE mit einer bestimmten Gerätekategorie erlaubt, und die bestimmte Gerätekategorie durch Downlink physikalische Schichtparameter, Uplink physikalische Schichtparameter und Schicht-2 Puffergröße definiert ist;
einem Bestimmungsmodul (72), das zum Bestimmen, ob ein Zugang zur der Zelle der Basisstation gemäß den empfangenen Netzzugangs-Steuerinformationen erlaubt ist, ausgeführt ist; und
einem Auswahlmodul (73), das zum Durchführen einer Zellenauswahl gemäß dem Bestimmungsergebnis ausgeführt ist.

15. Vorrichtung nach Anspruch 14, wobei, wenn die Netzzugangs-Steuerinformationen eine erste Anzeige darstellen, die anzeigt, ob der Zugang zu der UE mit der bestimmten Gerätekategorie erlaubt ist, das Bestimmungsmodul (72) weiterhin dazu ausgeführt ist zu bestimmen, ob ein Zugang zu der Zelle der Basisstation gemäß einer Gerätekategorie der UE und der ersten Anzeige erlaubt ist.

16. Vorrichtung nach Anspruch 14, wobei die Netzzugangs-Steuerinformationen Merkmalsinformationen einer UE umfassen, zu welcher der Zugang erlaubt ist;
das Bestimmungsmodul (72) weiterhin dazu ausgeführt ist zu bestimmen, ob ein Zugang zu der Zelle der Basisstation gemäß Merkmalsinformationen der UE und den von den Netzzugangs-Steuerinformationen angezeigten Merkmalsinformationen erlaubt ist.

17. Vorrichtung nach Anspruch 16, wobei, wenn die von den Netzzugangs-Steuerinformationen angezeigten Merkmalsinformationen eine Gerätekategorie der UE darstellen, zu welcher der Zugang erlaubt ist, ist das Bestimmungsmodul (72) weiterhin dazu ausgeführt zu bestimmen, dass ein Zugang zu der Zelle der Basisstation erlaubt ist, wenn eine Gerätekategorie der UE der Gerätekategorie der UE entspricht, zu welcher der Zugang erlaubt ist.

18. Vorrichtung nach Anspruch 14, wobei das Auswahlmodul (73) weiterhin dazu ausgeführt ist, die Zelle der Basisstation zum Lagern auszuwählen, wenn das Bestimmungsmodul (72) bestimmt, dass der UE der Zugang zu der Zelle der Basisstation erlaubt ist; eine weitere Zelle zum Lagern auszuwählen, wenn das Bestimmungsmodul (72) bestimmt, dass der UE der Zugang zu der Zelle der Basisstation nicht erlaubt ist; und
das Bestimmungsmodul (72) weiterhin dazu ausgeführt ist zu bestimmen, dass der UE der Zugang zu der Zelle der Basisstation nicht erlaubt ist, wenn das Empfangsmodul (71) die Netzzugangs-Steuerinformationen nicht empfängt.

## Revendications

1. Procédé d'indication pour accéder à une cellule, comprenant :
la diffusion (501), par une station de base, d'informations de contrôle d'accès au réseau ;
**caractérisé en ce que** les informations de contrôle d'accès au réseau sont destinées à indiquer si une cellule de la station de base autorise l'accès d'un équipement d'utilisateur, UE, avec une catégorie d'UE spécifique, et la catégorie d'UE spécifique est définie par des paramètres de couche physique de liaison descendante, des paramètres de couche physique de liaison montante et une taille de tampon de couche 2.

2. Procédé selon la revendication 1, dans lequel les informations de contrôle d'accès au réseau comprennent :
un indicateur indiquant si l'accès de l'UE avec la catégorie d'UE spécifique est autorisé.

3. Procédé selon la revendication 1, dans lequel les informations de contrôle d'accès au réseau comprennent des informations de caractéristique d'un UE dont l'accès est autorisé ;
dans lequel les informations de caractéristique comprennent une catégorie d'UE de l'UE dont l'accès est autorisé.

4. Procédé selon l'une quelconque des revendications 1 à 3, dans lequel la catégorie d'UE spécifique est une catégorie d'UE d'un dispositif de communication de type machine, MTC.

5. Dispositif de station de base, comprenant :
un module d'envoi (61), configuré pour envoyer des informations de contrôle d'accès au réseau ;
**caractérisé en ce que** les informations de contrôle d'accès au réseau sont destinées à indiquer si une cellule de la station de base autorise l'accès d'un équipement d'utilisateur, UE, avec une catégorie d'UE spécifique, et la catégorie d'UE spécifique est définie par des paramètres de couche physique de liaison descendante, des paramètres de couche physique de liaison montante et une taille de tampon de couche 2.

6. Dispositif selon la revendication 5, dans lequel le module d'envoi (61) est en outre configuré pour envoyer un indicateur indiquant si l'accès de l'UE avec la catégorie d'UE spécifique est autorisé.

7. Dispositif selon la revendication 5, dans lequel le module d'envoi (61) est en outre configuré pour envoyer des informations de caractéristique d'un UE dont l'accès est autorisé ;
dans lequel les informations de caractéristique comprennent une catégorie d'UE de l'UE dont l'accès est autorisé, et
le module d'envoi (61) est en outre configuré pour envoyer la catégorie d'UE de l'UE dont l'accès est autorisé.

8. Procédé pour sélectionner une cellule, comprenant :
la réception, par un équipement d'utilisateur, UE, d'informations de contrôle d'accès au réseau diffusées par une station de base, **caractérisé en ce que** les informations de contrôle d'accès au réseau sont destinées à indiquer si une cellule de la station de base autorise l'accès d'un UE avec une catégorie d'UE spécifique, et la catégorie d'UE spécifique est définie par des paramètres de couche physique de liaison descendante, des paramètres de couche physique de liaison montante et une taille de tampon de couche 2 ;
la détermination, par l'UE, de s'il est autorisé à accéder à la cellule de la station de base en fonction des informations de contrôle d'accès au réseau reçues ; et
l'exécution, par l'UE, d'une sélection de cellule en fonction du résultat de détermination.

9. Procédé selon la revendication 8, dans lequel la détermination par l'UE de s'il est autorisé à accéder à la cellule de la station de base en fonction des informations de contrôle d'accès au réseau reçues comprend :
lorsque les informations de contrôle d'accès au réseau sont un premier indicateur indiquant si l'accès de l'UE avec la catégorie d'UE spécifique est autorisé, la détermination, par l'UE, de s'il est autorisé à accéder à la cellule de la station de base en fonction d'une catégorie d'UE de l'UE et du premier indicateur.

10. Procédé selon la revendication 8, dans lequel les informations de contrôle d'accès au réseau comprennent des informations de caractéristique d'un UE dont l'accès est autorisé,
la détermination par l'UE de s'il est autorisé à accéder à la cellule de la station de base en fonction des informations de contrôle d'accès au réseau reçues comprend :
la détermination, par l'UE, de s'il est autorisé à accéder à la cellule de la station de base en fonction d'informations de caractéristique de l'UE et des informations de caractéristique indiquées par les informations de contrôle d'accès au réseau.

11. Procédé selon la revendication 10, dans lequel la détermination par l'UE de s'il est autorisé à accéder à la cellule de la station de base en fonction d'informations de caractéristique de l'UE et des informations de caractéristique indiquées par les informations de contrôle d'accès au réseau comprend :
lorsque les informations de caractéristique indiquées par les informations de contrôle d'accès au réseau sont une catégorie d'UE de l'UE dont l'accès est autorisé, la détermination, par l'UE, qu'il est autorisé à accéder à la cellule de la station de base lorsqu'une catégorie d'UE de l'UE concorde avec la catégorie d'UE de l'UE dont l'accès est autorisé.

12. Procédé selon la revendication 8, dans lequel l'exécution d'une sélection de cellule en fonction du résultat de détermination comprend :
la sélection (502), par l'UE, de la cellule de la station de base pour camper lorsque l'UE détermine qu'il est autorisé à accéder à la cellule de la station de base ; et/ou
la sélection (502), par l'UE, d'une autre cellule pour camper lorsque l'UE détermine qu'il n'est pas autorisé à accéder à la cellule de la station de base.

13. Procédé selon l'une quelconque des revendications 8 à 12, comprenant en outre :
la détermination, par l'UE, qu'il n'est pas autorisé à accéder à la cellule de la station de base lorsque l'UE ne reçoit pas les informations de contrôle d'accès au réseau ;
dans lequel la catégorie d'UE spécifique est une catégorie d'UE d'un dispositif de communication de type machine, MTC.

14. Dispositif d'équipement d'utilisateur, UE, comprenant :
un module de réception (71), configuré pour recevoir des informations de contrôle d'accès au réseau diffusées par une station de base, **caractérisé en ce que** les informations de contrôle d'accès au réseau sont destinées à indiquer si une cellule de la station de base autorise l'accès d'un UE avec une catégorie d'UE spécifique, et la catégorie d'UE spécifique est définie par des paramètres de couche physique de liaison descendante, des paramètres de couche physique de liaison montante et une taille de tampon de couche 2 ;
un module de détermination (72), configuré pour déterminer s'il est autorisé à accéder à la cellule de la station de base en fonction des informations de contrôle d'accès au réseau reçues ; et
un module de sélection (73), configuré pour effectuer une sélection de cellule en fonction du résultat de détermination.

15. Dispositif selon la revendication 14, dans lequel lorsque les informations de contrôle d'accès au réseau sont un premier indicateur indiquant si l'accès de l'UE avec la catégorie d'UE spécifique est autorisé, le module de détermination (72) est en outre configuré pour déterminer s'il est autorisé à accéder à la cellule de la station de base en fonction d'une catégorie d'UE de l'UE et du premier indicateur.

16. Dispositif selon la revendication 14, dans lequel les informations de contrôle d'accès au réseau comprennent des informations de caractéristique d'un UE dont l'accès est autorisé ;
le module de détermination (72) est en outre configuré pour déterminer s'il est autorisé à accéder à la cellule de la station de base en fonction d'informations de caractéristique de l'UE et des informations de caractéristique indiquées par les informations de contrôle d'accès au réseau.

17. Dispositif selon la revendication 16, dans lequel lorsque les informations de caractéristique indiquées par les informations de contrôle d'accès au réseau sont une catégorie d'UE de l'UE dont l'accès est autorisé, le module de détermination (72) est en outre configuré pour déterminer qu'il est autorisé à accéder à la cellule de la station de base lorsqu'une catégorie d'UE de l'UE concorde avec la catégorie d'UE de l'UE dont l'accès est autorisé.

18. Dispositif selon la revendication 14, dans lequel le module de sélection (73) est en outre configuré pour sélectionner la cellule de la station de base pour camper lorsque le module de détermination (72) détermine que l'UE est autorisé à accéder à la cellule de la station de base ; pour sélectionner une autre cellule pour camper lorsque le module de détermination (72) détermine que l'UE n'est pas autorisé à accéder à la cellule de la station de base ; et
le module de détermination (72) est en outre configuré pour déterminer que l'UE n'est pas autorisé à accéder à la cellule de la station de base lorsque le module de réception (71) ne reçoit pas les informations de contrôle d'accès au réseau.
